# EUROPEAN PATENT APPLICATION

(11) **EP 1 908 346 A1**
(43) Date of publication of application: **09.04.2008**
(21) Application number: 06020256.1
(22) Date of filing: 27.09.2006
(51) Int. Cl.: A01N 1/02

(54) **Method for the production of frozen blood or frozen blood cells for biological assays**

(71) Applicant: Paul-Ehrlich-Institut Bundesamt für Sera und Impfstoffe, 63225 Langen (DE)
(72) Inventor: Montag-Lessing, Thomas, 64283 Darmstadt (DE); Spreitzer, Ingo, 65203 Wiesbaden (DE); Löschner, Bettina, 63303 Dreieich-Sprendlingen (DE)
(74) Representative: Krauss, Jan

(57) **Abstract**

The present invention relates to an improved method for cryo-preservation of human whole blood containing monocytes and lymphocytes at temperatures of between -40°C and -60°C, preferably at -60°C, whereby the function of monocytes and lymphocytes is preserved. The present invention particularly relates to a method for cryo-preservation of human whole blood containing monocytes and lymphocytes without the need for an isolation of peripheral blood mononuclear cells (PBMCs), or blood cells.

## Description

The present invention relates to an improved method for cryo-preservation of human whole blood containing monocytes and lymphocytes or blood cells at temperatures of between -40°C and -60°C, preferably at between -50°C and -60°C, whereby the function of monocytes and lymphocytes is preserved. The present invention particularly relates to a method for cryo-preservation of human whole blood containing monocytes and lymphocytes without the need for an isolation of peripheral blood mononuclear cells (PBMCs), or blood cells.

### Background of the invention

For the clinical examination of vaccines against pathogens that are repelled by cell mediated immunity (i.e. the cellular immune status of vaccinated individuals) usually the mononuclear cells are isolated from the blood samples of vaccinated individuals. For this, highly specialized laboratories with accordingly qualified staff must be installed on-site. Furthermore, all vessels and reagents must be pyrogen-free. Usually, the cells are frozen, stored and shipped in liquid nitrogen (usually in vapor phase).

Often, the above clinical examinations are performed in developing countries (e.g. in Africa). The installation of specialized laboratories on site, recrution of suitable staff as well as the transport of samples in liquid nitrogen require a high financial and technical effort. Furthermore, the isolation of the mononuclear cells under pyrogen-free conditions is accident sensitive, an activation of the monocytes by pyrogenic substances is possible, rendering the sample worthless.

Cryo-preserved blood or blood cells are also considered to be a basic tool in alternative pyrogen testing based on human fever reaction. In brief, the samples to be measured are incubated with human blood or blood cells in the heat and, thereafter, the production of pro-inflammatory cytokines as indicator for activation of monocytes is estimated. The procedure can be performed with freshly drawn human blood, too, but ready-to-use and well characterised blood or blood cells are necessary for standardisation and market distribution as a rule.

Lakey et al. (Lakey JR, Anderson TJ, Rajotte RV. Novel approaches to cryo-preservation of human pancreatic islets. Transplantation. 2001 Sep 27;72(6):1005-11.) describe the cryo-protective effect of ethylene glycol (EG) with the standard cryo-protectant, dimethyl sulfoxide (DMSO), on isolated human islet survival and function. The results demonstrate that a lower concentration of DMSO (1.5 M) allows for the cryo-preservation of human islets with superior survival and preservation of function post-culture compared with 2.0 M of DMSO and various concentrations of EG.

Human whole blood assays are increasingly employed to test immune function or detect pyrogenic contamination, since they offer advantages, such as ease of performance, few preparation artefacts and a physiological cell environment. However, the approach is often limited by the availability of freshly drawn blood, putative safety concerns in the case of infected donors and inter-individual donor differences.

EP 0 741 294 B1 describes a method for testing compounds for pyrogenic activity by contacting with whole blood and then measuring the production of endogenous pyrogens. No cryo-conservation of blood is described.

Schindler et al. (Schindler S, Asmus S, von Aulock S, Wendel A, Hartung T, Fennrich S. Cryopreservation of human whole blood for pyrogenicity testing. J Immunol Methods. 2004 Nov; 294(1-2):89-100 describe a method to produce batches of cryo-preserved blood that can be used directly after thawing without any washing steps. Mononuclear cells remained intact as shown by FACS analysis. Cytokine release could be induced by a variety of immunological stimuli. The cell preparation released higher amounts of interleukin-1beta (IL-1beta) and IL-6 compared to fresh blood, but no TNF. These differences could be attributed to the presence of the cryo-protectant dimethylsulfoxide (DMSO) alone by addition of DMSO to fresh blood. Large batches of cryo-preserved blood could be produced by mixing blood donations of up to 10 donors, independent of differing blood groups. The detection limit for the World Health Organization (WHO) lipopolysaccharides (endotoxin, LPS) reference preparation (EC-6) with regard to the induction of IL-1beta release was at least 0.5 endotoxin equivalent units (EU)/ml. Endotoxin spikes at the limit concentrations prescribed in the European Pharmacopoeia could be detected in a series of drugs, showing that the in vitro pyrogen test (IPT) can also be run with cryo-preserved blood. Further possible applications are described that include high-throughput screening for immuno-modulators or toxins as well as preservation of patient samples for later analysis of monocyte functions.

EP 05 024 463.1 describes an improved method for cryo-preservation of mammalian whole blood, comprising providing a sample of human whole blood, providing a diluted aqueous cryo-protective agent, admixing said sample and said diluted aqueous cryo-protective agent in a ratio of between 1:2 and 2:1 in order to produce a cryo-premix, and freezing said premix at temperatures of between -65°C and -100°C, preferably at -80°C, in a suitable freezer in order to obtain a cryo-preserved sample of mammalian whole blood.

Nevertheless, all above cited references relate to cryo-preservation by shock-freezing through plunging into liquid nitrogen (-196°C) or use dry-ice (-79°C). Furthermore, it is known that the cells being preserved are often damaged during the approach to low temperatures or warming to room temperature due to solution effects and intracellular ice formation, which can be prevented only by very rapid freezing.

Furthermore, alternative pyrogen testings on the basis of the human fever reaction are established by means of incubation of a test sample with human whole blood and the production of IL-1, IL-6 or TNFα as readout. In addition, kits said for alternative pyrogen testings are available on the market (standards, buffers, ELISA etc.), but freshly drawn human blood is necessary for every experiment. Finally, as above, the technology for cryo-preservation of PBMCs in liquid nitrogen is well established, but is expensive and laborious as it requires laboratory equipment, production processes, and suitable shipping and storage.

In view of the above, there is still a need for a method for the simple conservation of whole blood, which is, nevertheless, ready to use, characterized, safe, and stable. It is therefore an object of the present invention, to provide such an improved method as well as the advantages associated with such a method and related methods, in particular at relatively high temperatures of between about -60°C to about -40°C.

According to a first aspect according to the present invention, the above object is solved by an improved method for cryo-preservation of mammalian whole blood or blood cells, comprising providing a sample of human whole blood or blood cells, providing a diluted aqueous cryo-protective agent, admixing said sample and said diluted aqueous cryo-protective agent in order to produce a cryo-premix, and freezing said premix at temperatures of between -40°C and -65°C in a suitable freezing agent or freezer in order to obtain a cryo-preserved sample of mammalian whole blood or blood cells.

The first advantage of the inventive technology compared with established methods using nitrogen (liquid or gaseous) or dry-ice is that the costs are lower by several orders of magnitude. No automatic freezers and nitrogen containers for storage and transport, or - 80°C deep-freezers are required, both for freezing and for storage, and no dry ice for transport. Thus, investments in peripheral and central labs can be saved on the one hand and high transport cost on the other.

The second advantage of the inventive technology is that samples collected from individuals can also be frozen directly as whole blood without the risk of contamination. During the asservation of samples for the determination of cell-bound immunity (and for the pyrogen test), it is absolutely essential to prevent the PBMCs from being stimulated, since the specific signal can then no longer be measured due to a high noise level. In the established methods, the PBMCs are isolated by means of gradient centrifugation before cryo-preservation takes place. To prevent stimulation of the cells, pyrogen-free gradient gels must be guaranteed, which often is not the case with conventional gradients and/or test tubes. In addition, the work in the asservation lab must be absolutely sterile and pyrogen-free, which, under routine conditions, is often difficult to achieve. The latter particularly applies to laboratories with little experience or staff with low qualification.

The third advantage of the inventive method is that no allogenic human AB serum respectively plasma is needed in order to protect function of immune cells. For successful cryo-preservation of isolated PBMCs or other cells, the addition of human serum (obtained from donors having the blood group AB for excluding actions of blood group iso-agglutinins towards lymphocytes) is crucial. Suitable lots of AB serum have to be carefully selected because a certain percentage of them induce T cell stimulation. The best reagent in cryo-preservation of PBMCs is autologous serum. Cryo-preserving whole blood, autologous serum respective plasma is automatically contained in the sample or added, if required.

Preferably, said diluted aqueous cryo-protective agent is selected from 10%-30% DMSO, preferably 20%, in phosphate buffer (e.g. Sorensen buffer), aqueous buffers containing salts at about physiological concentrations (e.g. 150 mM) or other suitable aqueous salt-free or essentially salt-free buffers. "Essentially salt-free" means that the buffer contains only trace amounts of salt(s) and/or very low amounts of salt(s) of below 10 mM. Other of those buffers are known to the person of skill in the art. Other suitable agents include hydroxyethyl-starch (HES). It was surprisingly found that it is not required to cool the cells and the DMSO or hold them on ice prior to admixing. In the method according to the invention, both components can be held at room temperature (see examples, below).

In another embodiment of the method according to the present invention, said admixing is performed by carefully admixing said sample and said diluted aqueous cryo-protective agent. Careful mixing can be performed by slowly dropping the diluted aqueous cryo-protective agent into the sample of whole blood or blood cells and mixing by inverting the tube or vessel containing the sample. Carefully shaking of the sample upon the admixture of the cryo-protective agent (such as DMSO) is preferred.

In another preferred embodiment of the method according to the present invention, the sample further comprises an anticoagulant, such as heparin, which is added to the blood sample at an appropriate point in time.

In another preferred embodiment of the method according to the present invention, the blood cells are selected from peripheral human mononuclear cells (PBMC), apherese-monocytes, buffy coat, stem cells (e.g. from cord blood or peripheral blood), cell therapeutics (e.g. dendritic cells for tumor therapy), and gene-therapeutics on a cellular basis (e.g. genetically modified lymphocytes).

Optimally, said cryo-preserved sample of mammalian whole blood or blood cells is filled into cryo-tubes without inclusion of a substantial amount of air, in order to avoid a freeze-drying of the monocytes in the sample.

Preferably, following the admixing step, said premix is then kept at ambient temperature or between 4°C and 30°C, preferably 22 +/- 2°C for a time period of between 30 minutes to 180 minutes, preferably between 30 minutes to 60 minutes. It was surprisingly found that this short storage step before freezing increases the reactivity of the cells as frozen compared to samples that are frozen directly after adding the cryo-protective agent (such as DMSO). Again, without wanting to be bound by theory, it appears that this effect could be due to an improved integration of the cryo-protective agent into the cellular membranes and into the cytoplasma.

Preferably, said premix is frozen at temperatures of between -40°C and -60°C, preferably at - 55°C to -60°C. Freezing is done in a suitable freezer, such as, for example a -40°C or -60°C commercially available freezer. Furthermore, suitable freezing agents, such as dry ice, as long as suitable temperatures can be reached.

In another aspect of the present invention, a method according to the invention is provided that further comprising the step of storing said cryo-preserved sample at temperatures of between -40°C and -60°C, preferably at -55°C to -60°C, for a time period of between 1 to 4 weeks, preferably 3 weeks. It was surprisingly found that the reactivity/viability of cells that have been stored at between -40°C and -60°C, and preferably at -55°C to -60°C, for a certain period of time (optimally for about 3 weeks) is improved, compared to cells that have been stored for a shorter period of time. Within this time, an optimal reactivity is achieved, and therefore preferably such a minimal storage period should be employed.

In another embodiment of the method according to the present invention, said mammal is selected from a mouse, rat, goat, cat, dog, horse, sheep, guinea pig, hamster, monkey or human. A human is preferred.

In another embodiment of the method according to the present invention, the sample is a pool of samples of whole blood or blood cell samples. For practical reasons, such a pool can consist of 2 to 20, preferably about 10, samples, but the theoretical number of samples is unlimited.

Another aspect of the present invention is directed to a method for the determination of the individual immune status, especially the cell bound immunity, of vaccinated individuals, comprising a method for cryo-preservation as above.

Another aspect of the present invention is directed to a method for pyrogen testing, comprising a method for cryo-preservation as above.

Another aspect of the present invention is directed to a method for determining the stability and functionality of CD4 and CD8 T cells and other immune cells, comprising a method for cryo-preservation as above.

Yet another aspect of the present invention is directed to a method for the clinical testing of vaccines against pathogens that are rejected through cellular immunity, comprising a method for cryo-preservation as above.

Yet another aspect of the present invention is directed to a kit for performing a method as described herein, wherein said kit contains material for performing said methods, such as vials, standards, buffers, materials for ELISA, materials for Flow Cytometry, manuals, and/or materials for shipping the frozen samples.

According to the present invention, a method was developed that allows for freezing of samples of whole blood for a determination of the cell-bound immunity without further preparation, in particular without prior isolation of the mononuclear cells. The monocytes and lymphocytes of the samples are not impaired in their function. The cryo-conservation occurs without liquid nitrogen. Thereby, the asservation of individual blood samples (e.g. for the clinical examination of vaccines) becomes possible with very low financial and technical effort.

In one particular embodiment, the object of the present invention is solved in that the required cryoprotectans (e.g. DMSO) is pre-diluted (e.g. 20% in buffer such as above or phosphate buffer) and then the blood or blood cell samples are carefully admixed (e.g. in a ratio of 1:1). After standing at, preferred, room temperature, the sample can be frozen directly at between - 40°C and - 60°C in a freezer or on dry ice. Additional auxiliaries are not required. The function (e.g. ability to stimulate with suitable markers) of monocytes and CD3-cells is maintained. The so produced cryoblood-samples are stable for at least one year.

Surprisingly, deep-frozen blood samples for the detection of the cell-bound immunity (a) no longer need to be pre-conditioned in highly specialised laboratories (isolation of the mononuclear cells), and (b) no longer need to be frozen and transported in freezers on the basis of liquid nitrogen or at -80°C.

The advantages of the invention consist in substantial savings of costs (approx. 90%), and labour. For the clinical examination of vaccines against pathogens that are rejected by means of cell-bound immunity (e.g. tuberculosis, malaria), no labor intensive and expensive laboratories as well as no highly qualified staff is required. The transport of the samples is also simplified. Furthermore, the danger of the contamination of the samples (e.g. by non pyrogen free devices and chemicals during cellular isolation) can be essentially reduced.

For the determination of the cellular immune status of the patient, if performed, for example, at the site of examination in the doctors' office or at the internist, until now fresh blood must be taken and examined at the very same day in a specialised laboratory, requiring logistic effort, such as courier etc. and involving further costs. The method according to the present invention allows the asservation of the sample as required without further problems. The sample can be diagnosed later and can simply be shipped on dry ice. Similar situations can be contemplated in veterinary medicine (since this also can involve clinical testing of vaccines), and are encompassed by the scope of the present invention,

Although the methods of the present invention are described in view of their preferred applicability in humans, they can also be used in other animals in, for example, clinical trials and studies in analogy to a human in case of vaccines, such as, for example, for cattle.

Yet another aspect of the present invention is directed to a method for analyzing and/or detecting pyrogens in air (preferably in the context of the "sick-building-syndrome"), wherein the air is ventilated through a membrane filter, and the filter is subsequently incubated with diluted blood, or cryo-blood, respectively, prepared according to the invention, followed by a test as described herein.

Yet another aspect of the present invention is directed to a method for analyzing and/or detecting the lack of pyrogens of reaction vessels, storage containers/barrels, containers/fermenters in the pharmaceutical industry (e.g. before a transport/shipping/storage/production), wherein the diluted blood as prepared according to the invention is added, is allowed to react/contact, and then the cytokines or other suitable parameters are determined.

The present invention shall now be described further in the following examples with respect to the attached drawings without being limited thereto. For the purposes of the present invention, all references as cited herein are incorporated by reference in their entireties.

Figure 1 shows the testing of the quality of cryoblood produced and stored at minus 40 °C. The reactivity of cryoblood deep-frozen at minus 40°C after thawing (storage for 7 days at - 40°C) towards endotoxin in comparison to the reaction of freshly drawn blood (fresh and deep frozen blood samples from the same donors respectively from the same blood samples) was tested.

Figures 2 and 3 show another testing of the quality of cryoblood produced at minus 60°C in comparison of freshly drawn blood of the same donors (in particular and as pooled samples) and in comparison to production and storage at minus 80°C.

Figures 2A to D show the reactivity of fresh blood samples drawn from 5 donors towards endotoxin (WHO Standard), induction of IL-1β (A), IL-6 (B), and TNFα (particular determination and summarising determination in Tri-Cytokine-ELISA) (C and D).

Figures 3A to D show the reactivity of cryoblood (pooled blood from of the 5 donors shown in figure 2) towards endotoxin (WHO Standard) after 7 days of storage, induction of IL-1β (A), IL-6 (B), and TNFα (C) (particular determination and summarising determination in Tri-Cytokine-ELISA) (D). All data are produced in comparison to production and storage at minus 80°C.

Figure 4 shows the stability of cryoblood produced and stored at minus 60 °C (4A). The reactivity of cryoblood preserved at minus 60°C after thawing towards endotoxin (WHO Standard) in comparison to the reaction of cryoblood preserved at minus 80°C (4B) was tested.

### Examples

### Production of cryoblood at different temperatures

About 9 ml of blood were each taken from five healthy subjects by means of heparinised tubes (e.g. Sarstedt S-monovettes 9ml LH as well as Multifly set 21G, sterile and pyrogen-free). The amount of the blood to be taken can readily be increased. The amount will depend from a protection of the donor in accordance with transfusion-medicinal considerations on the one hand, and from logistic criteria (production or processing of the cryoblood within a defined period of time by considering of the capacity as available) on the other. Before the withdrawal of the blood, the donors are inquired regarding acute infectious diseases or the use of anti-inflammatory medicaments, in order to exclude eventual pre-stimulations or medication-based inhibitions of their monocytes as much as possible.

A small volume of each sample of blood is tested for a reactivity as well as eventual pre-stimulation of the monocytes (see item 1, pre-test with fresh blood) in a fresh state within about 3 hours following withdrawal. Furthermore, these results serve as reference values for the evaluation of the success of the cryoconservation.

The main volumes of the blood samples were pooled, and frozen at different temperatures (minus 40°C, minus 60°C, and minus 80°C) (see item 2, cryoconservation). Following a short storage in the freezers, the success of the cryoconservation is tested (see item 3, quality control of the des cryoblood). Thereafter, the storage-stability of the cryoblood is tested by assaying the reactivity of the monocytes at several points in time (see item 4, storage stability).

### 1. Pre-testing with fresh blood

After the withdrawal, a small volume (about 200µl) of each of the blood samples is examined without further treatment in the whole blood pyrogen test. This examination should not take place after more than 3 hours following the withdrawal of the blood. For this reason, the addition of the respective blood sample into a cell culture plate (e.g. BD Falcon 353072, 96 well flat bottom, sterile and pyrogen-free, if required the plates must be tested for sterility and lack of pyrogens) takes place by means of a multistepper (Brand HandyStep or Eppendorf Multipette plus 4981) and sterile und pyrogen-free attachments (e.g. Eppendorf Combitips biopur 1ml). The plate was prepared before with cell culture medium (RPMI 1640 w/L-glutamine of Cambrex, Invitrogen, Biochrom, Biozol, Sigma or Gibco, content of endotoxin < 0.025 IU/ml) and respective positive controls (e.g. NIBSC, 2nd International Standard-LPS 94/580) in form of a series of dilutions in both sterile und pyrogen-free saline (isotonic sodium chloride solution, e.g. of Fresenius Kabi or B. Braun) as well as the corresponding sterile and pyrogen-free negative control (isotonic sodium chloride solution, e.g. of Fresenius Kabi or B. Braun). The amounts as used are as follows:
220µl RPMI 1640
+ 20µl control
+ 20µl fresh blood.

Then, the components are mixed uniformly and without foaming by means of a stroke of the piston of 100 to 120µl for five times, using sterile and pyrogen-free tips (e.g. Eppendorf epT.I.P.S. biopur) and a multi-channel pipette (e.g. Eppendorf Research). Finally, the covered plate is transferred into a cell incubator (e.g. Heraeus Cytoperm or Labotect C42) for 10 to 24 hours (commonly over night) at 37°C, 5% CO2 and 95% humidity.

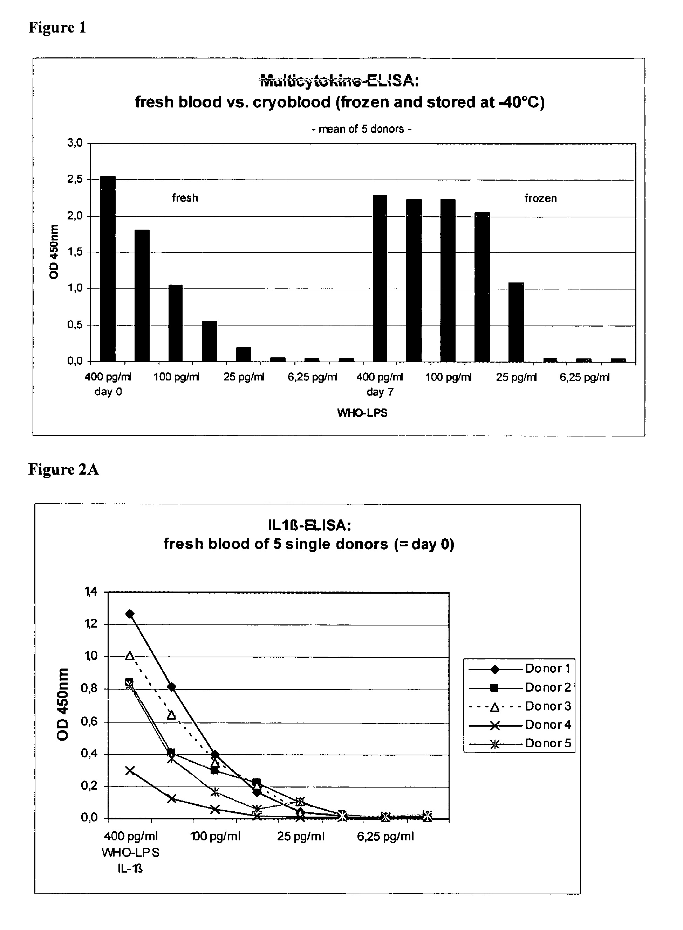

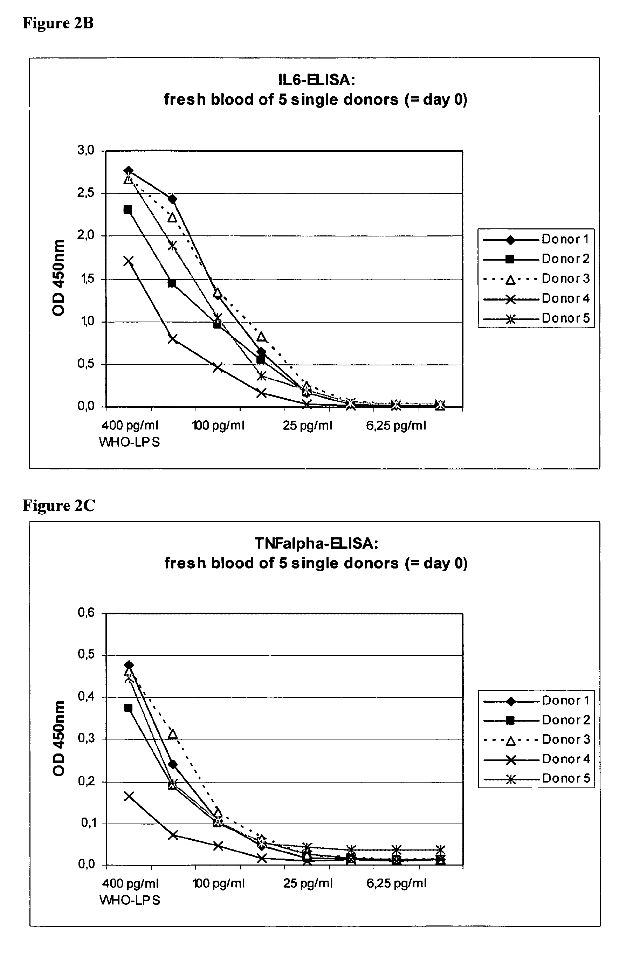

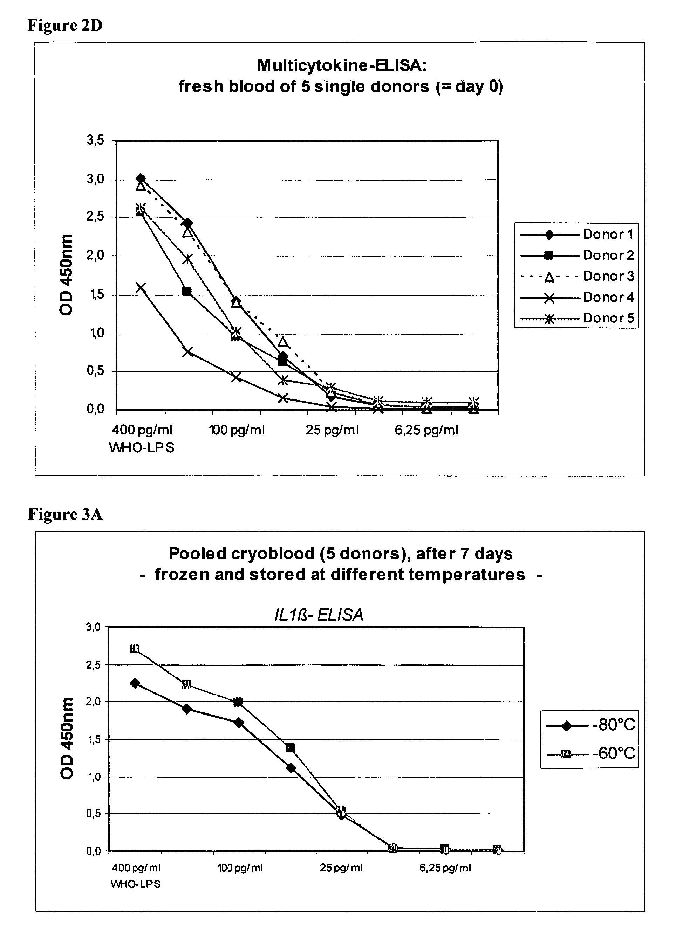

Subsequently, the endogenous pyrogens IL-1 β, IL-6, and TNFα (in particular and as Multi-Cytokine-ELISA) in the individual preparations are determined in an ELISA (see also item 3). The results of the pre-tests are shown in Figure 2.

### 2. Cryoconservation

The main volumes of the blood samples as withdrawn are transferred into de-pyrogenised glass vessels by means of sterile and pyrogen-free serological single-use pipettes (e.g. Greiner Bio-one or VWR), and admixed. Optionally, the cryoconservation of the blood samples of individual donors takes place in the identical manner. Then, the same volume of a 20% solution of DMSO in Sörensen-buffer (DMSO: e.g. Sigma D-2650; Sörensen-buffer: e.g. Pyroquant PYROKONTROL, about 30 mM phosphate, both reagents sterile and pyrogen-free) as prepared before is added to this pool with slow, uniform panning. Nevertheless, also other solutions can be used (e.g. 50 mM Tris-buffer, PBS, 0.9% saline, RPMI 1640; all solutions must be sterile and pyrogen-free, must be tested, if necessary). In contrast to what is established in the respective literature, the DMSO-containing solution is held in temperature-range of about 20°C (room temperature), and not in an ice-cold state. After 30 to 60 minutes at room temperature, the mixture is aliquoted at 1.5 ml into cryotubes (e.g. Nunc Cryotube vials 1.8 ml, sterile and pyrogen-free, must be tested if necessary). A tight sealing of the tubes must be ensured. A minimum period of time of 30 minutes before the cryoconservation (equilibration) must be complied with.

Subsequently, the freezing of the pool of blood takes place at different temperatures. For this, the cryotubes are divided into three groups of approximately the same size, transferred into suitable boxes for storage (e.g. plastic-cryoboxes 9 x 9 of Nalgene, Roth or Brand), and stored without any further auxiliary means in the following freezers:
a) Minus 80°C (Device: Heraeus Hera Freeze)
b) Minus 60°C (Device: Forma Scientific Enviroscan Bio-Freezer)
c) Minus 40°C (Device: DJM CryoResearch Ultra Low Freezer).

### 3. Quality control of the cryoblood

It is recommended to perform a quality control of the cryoblood at the earliest after about one week of storage, since obviously equilibration processes still take place even in the deep-frozen state. For an examination of the cryoconserved pooled samples, one aliquot is each thawed preferably standing free at 37°C in a drying cabinet (e.g. Heraeus VT 5042). Thawing by unmoved warm air is superior to other methods (e.g. in a water bath or in a thermoblock). After 15 minutes, the tube is taken from the warming cabinet, and well mixed by careful shaking upside-down. Immediately thereafter, the addition into a cell culture plate with medium and controls takes place, again by means of multistepper and pyrogen-free preparations, as described above at item 1 for the incubation of fresh blood. The exact observation of the time for thawing and a rapid processing are is important, since the cryoblood until the addition into the cell culture plate is under the influence of 10 % DMSO, which can lead to impairments of the monocyte-function. As can be seen from the following, the DMSO-concentration is diluted by a factor of 6.5 by the addition into the culture medium. The composition is as follows:
200µl RPMI 1640
+ 20µl control
+ 40µl cryoblood (doubling of the volume of the blood compared to fresh blood due to pre-dilution with DMSO-containing buffer).

After the admixing of the components (see also at item 1 at the incubation of fresh blood), also in this case the covered plate is transferred into a cell incubator as mentioned above for 10 to 24 hours under the conditions as indicted.

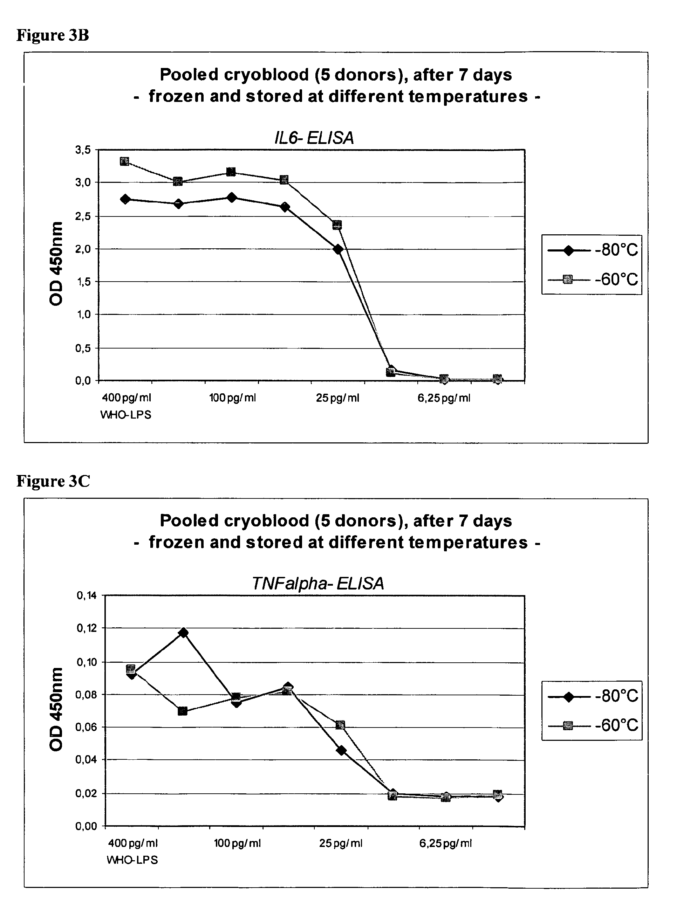

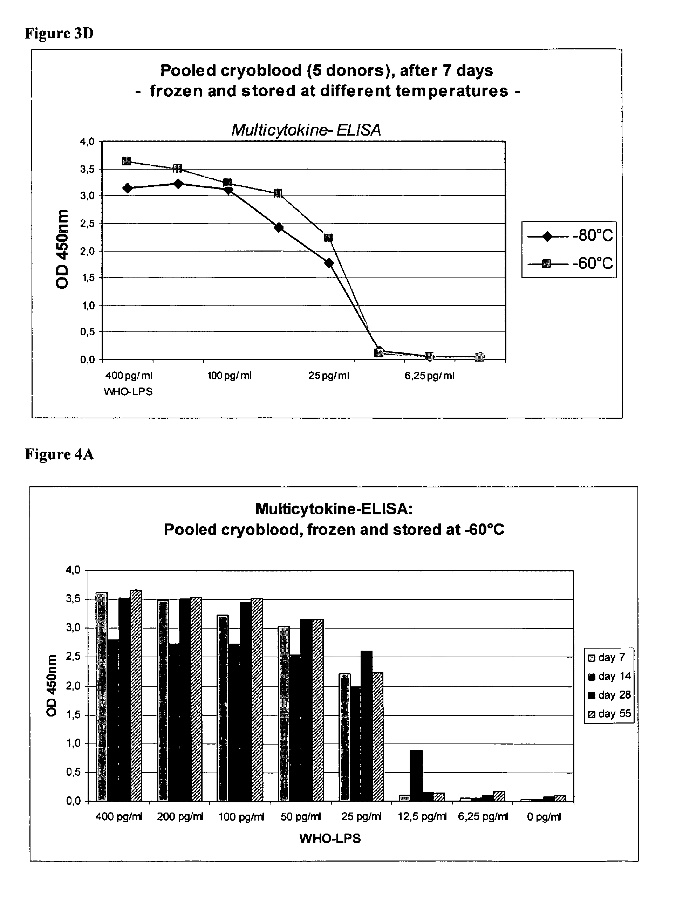

After expiry of the time of incubation the culture plate is taken from the incubator, and the content of the wells is mixed again using a multi-channel pipette and 5 to 6 strokes of 100µl. No separation of supernatant and cells or debris is required. Then, 50 to 200µl of each sample are used in a single-cytokine-ELISA (R&D Systems Quantikine or DuoSet), according to the recommendations of the manufacturer, or in a multi-cytokine-ELISA in order to be able to detect the releases of IL-1β and/or IL-6 and/or TNFα as induced by the LPS-stimuli. The results are shown in Figures 1 to 3.

### 4. Examinations regarding a storage stability of the cryoblood

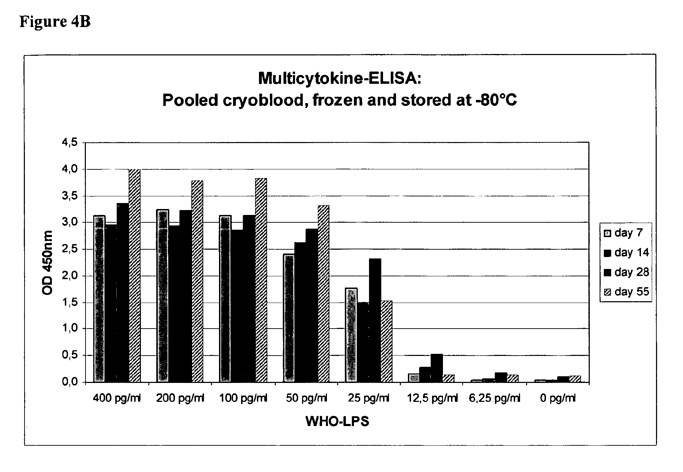

Samples of the cryoconserved blood are taken at different points in time from the freezers and examined for the reactivity of the monocytes in analogy to item 3. The results are shown in Figure 4.

## Claims

1. Method for cryo-preservation of mammalian whole blood or blood cells, comprising
- providing a sample of human whole blood or blood cells,
- providing a diluted aqueous cryo-protective agent,
- admixing said sample and said diluted aqueous cryo-protective agent in order to produce a cryo-premix, and
- freezing said cryo-premix at temperatures of between -40°C and -60°C in a suitable freezer or freezing agent in order to obtain a cryo-preserved sample of mammalian whole blood or blood cells.

2. Method according to claim 1, wherein said diluted aqueous cryo-protective agent is selected from 10%-30% DMSO in phosphate buffer, such as Sörensen buffer, PBS or other buffers containing salts at physiological concentrations or other suitable aqueous salt-free and/or essentially salt-free buffers, and/or autologous plasma.

3. Method according to claim 1 or 2, wherein said diluted aqueous cryo-protective agent is admixed with the sample in a ratio of between 1:2 and 2:1.

4. Method according to any of claims 1 to 3, wherein said admixing is performed by carefully admixing said sample and said diluted aqueous cryo-protective agent.

5. Method according to any of claims 1 to 4, wherein the sample further comprises an anticoagulant, such as heparin.

6. Method according to any of claims 1 to 5, wherein said blood cells are selected from peripheral human mononuclear cells (PBMC), apherese-monocytes, buffy coat, stem cells, cell therapeutics, and gene-therapeutics on a cellular basis.

7. Method according to any of claims 1 to 6, wherein said cryo-preserved sample of mammalian whole blood or blood cells is filled into cryo-tubes without a substantial inclusion of air.

8. Method according to any of claims 1 to 7, further comprising the step of storing said cryo-premix sample following the admixing at ambient temperature or between 4°C and 30°C, preferably 22 +/- 2°C, for a time period of between 30 minutes to 180 minutes, preferably between 30 minutes to 60 minutes.

9. Method according to any of claims 1 to 8, wherein said cryo-premix is frozen at temperatures of between -40°C and -60°C, preferably at -60°C.

10. Method according to any of claims 1 to 9, further comprising the step of storing said cryo-preserved sample at temperatures of between -40°C and -60°C, preferably at - 50°C for a time period of between 2 to 4 weeks, preferably 3 weeks.

11. Method according to any of claims 1 to 10, wherein the components of the cryo-premix are held at room temperature before admixing thereof.

12. Method according to any of claims 1 to 11, wherein said mammal is a human.

13. Method according to any of claims 1 to 12, wherein the sample is a pool of samples of whole blood or blood cells from the same or different donors.

14. Method for the determination of the general immune status in an individual, comprising a method according to any of claims 1 to 13.

15. Method for pyrogen testing, comprising a method according to any of claims 1 to 13.

16. Method for determining the functionality of CD4 cells, CD8 T cells, monocytes and other immune cells, comprising a method according to any of claims 1 to 12.

17. Method for the clinical testing of vaccines against pathogens that are rejected through cellular immunity, comprising a method according to any of claims 1 to 13.
